# EUROPEAN PATENT SPECIFICATION

(11) **EP 1 772 601 B1**
(45) Date of publication and mention of the grant of the patent: **21.07.2010**
(21) Application number: 06254600.7
(22) Date of filing: 04.09.2006
(51) Int. Cl.: F01N 13/08, F01N 3/28

(54) **Motorcycle including an exhaust system**
Motorrad mit einer Auspuffanlage
Motocyclette incluant un système d'échappement

(30) Priority: 07.10.2005 JP 2005294629
(43) Date of publication of application: 11.04.2007
(73) Proprietor: Yamaha Hatsudoki Kabushiki Kaisha, Iwata-shi, Shizuoka 438-8501 (JP)
(72) Inventor: Harada, Keiichi, Iwata-shi Shizuoka-ken 438-8501 (JP)
(74) Representative: Lamb, Martin John Carstairs

(56) References cited:
- DE-A1- 4 040 721
- JP-A- 11 148 347
- JP-A- 59 020 518
- JP-A- 59 099 021
- JP-A- 60 017 220

## Description

### FIELD OF THE INVENTION

The present invention relates to a motorcycle comprising an exhaust system, and more particularly to a motorcycle which has a V-type engine and an exhaust gas purifying function.

### BACKGROUD OF THE INVENTION

According to a typical structure of an exhaust system of a motorcycle which includes a V-type engine, front exhaust pipes connected with cylinders disposed before an engine and rear exhaust pipes connected with cylinders disposed behind the engine are joined to an exhaust muffler via an exhaust chamber.

In this layout, both the front exhaust pipes and the rear exhaust pipes collectively joined to the exhaust chamber preferably have their optimum length so as to secure appropriate function of the engine. While the front exhaust pipes sufficiently have the optimum length, the rear exhaust pipes have only a short length to reach the exhaust chamber and therefore cannot easily obtain the same length as that of the front exhaust pipes.

Prior art references, such as patent reference JP-A-62-60914, disclose a layout of an exhaust system where the length of the rear exhaust pipes is made substantially equivalent to that of the front exhaust pipes by connecting the rear exhaust pipes to the exhaust chamber in a zigzag line, for example.

There has been also a demand for purification of exhaust gas discharged from an exhaust system in addition to the requirement for sufficient performance of the engine. Patent reference JP-A-59-99020, or others, proposes a technique of containing catalyst in the exhaust muffler.

Fig. 5 is a vertical cross-sectional plan view of an exhaust chamber 101 shown in JP-A-59-99020. Front exhaust pipes 102a and 102b are connected with the front part of an exhaust chamber 101, and rear exhaust pipes 103a and 103b are connected with the upper part of the exhaust chamber 101. The rear exhaust pipes 103a and 103b cross each other within the exhaust chamber 101 and extend from the cross point. The opening ends of the front exhaust pipes 102a and 102b and the rear exhaust pipes 103a and 103b are directed toward the opening ends of joint pipes 104a and 104b, which are joined to an exhaust muffler (not shown).

In this structure, the rear exhaust pipes 103a and 103b have sufficient length, and high-temperature exhaust gas discharged from the front exhaust pipes 102a and 102b and the rear exhaust pipes 103a and 103b are injected to the joint pipes 104a and 104b such that the exhaust gas can be introduced to the catalyst contained in the exhaust muffler without lowering the temperature of the exhaust gas. Thus, the performance of the engine can be secured and purification of the exhaust gas can be promoted.

According to the method shown in JP-A-59-99020, exhaust gas is purified by the catalyst contained in the exhaust muffler. The catalyst used in this method is constituted by ceramics coated with noble metals such as platinum or metal filters, and thus the weight of the catalyst becomes 1 kilogram or larger in some cases. As a result, the heavy component of the motorcycle is located at a rear position away from the center of gravity of the vehicle body, which deteriorates steering stability of the vehicle.

Additionally, since the rear exhaust pipes are extended within the exhaust chamber so as to obtain the sufficient length of the rear exhaust pipes, no space for accommodating the catalyst is left within the exhaust chamber. It is therefore difficult to position the catalyst within the exhaust chamber and locate the heavy component of the motorcycle near the center of gravity of the vehicle body

It is an object of the invention to provide a motorcycle having an exhaust system which has enhanced steering stability during running of the vehicle and improved function for purifying exhaust gas.

### SUMMARY OF THE INVENTION

The present invention provides a motorcycle comprising an exhaust system, the exhaust system comprising a front exhaust pipe connected with a front cylinder of a V-type engine; a rear exhaust pipe connected with a rear cylinder of the V-type engine; and an exhaust chamber connected with the respective rear ends of the front exhaust pipe and the rear exhaust pipe, wherein the rear end of the front exhaust pipe is connected with the front part of the exhaust chamber and the rear end of the rear exhaust pipe is connected with an upper part of the exhaust chamber; wherein exhaust gases discharged from the front exhaust pipe and the rear exhaust pipe are unified in a unifying section within the exhaust chamber, and a catalyst is disposed in the vicinity of the unifying section; and the length of the rear exhaust pipe is shorter than the length of the front exhaust pipe, characterised in that the front part of the exhaust chamber is of reduced width compared to the rear part of the exhaust chamber.

In a preferred embodiment, an exhaust muffler is connected with the rear part of the exhaust chamber.

There may be a plurality of front exhaust pipes connected to at least one front cylinder of the engine. In one embodiment, one or more additional catalysts may be disposed within at least one of the front exhaust pipes.

Preferably, the motorcycle comprises a plurality of rear exhaust pipes connected to at least one rear cylinder of the engine.

In a preferable embodiment, the motorcycle includes a vehicle body frame, a transmission chamber provided behind the V-type engine, a swing arm disposed behind the transmission chamber and supported by the vehicle body frame, and an oil pan equipped below the V-type engine. The exhaust chamber is disposed behind the oil pan and below a space defined between the transmission chamber and the swing arm.

In a preferable embodiment, the front exhaust pipe is adapted to extend from the front part of the front cylinder through the lower part of the V-type engine to be connected with the front part of the exhaust chamber, and the rear exhaust pipe is adapted to extend from the rear part of the rear cylinder and through a space defined between the transmission chamber and the support center of the swing arm to be connected with the upper part of the exhaust chamber.

In the layout of an exhaust system of a motorcycle according to the invention, a rear exhaust pipe having a shorter length than that of a front exhaust pipe is connected with an exhaust chamber so that exhaust gas can be introduced to a catalyst contained within an exhaust chamber without lowering the temperature of the exhaust gas. Thus, efficient purifying function can be offered by this structure. In addition, since the catalyst is contained within the exhaust chamber, the heavy component of the motorcycle is located near the center of gravity. As a result, steering stability of the vehicle can be enhanced.

### BRIEF DESCRIPTION OF THE DRAWINGS

An embodiment according to the invention is hereinafter described with reference to the accompanying drawings, in which:
Fig. 1 illustrates a motorcycle including an exhaust system in an embodiment according to the invention;
Fig. 2 is a side view showing a basic structure of the exhaust system in the embodiment according to the invention;
Fig. 3 is a plan view showing the basic structure of the exhaust system in the embodiment according to the invention;
Fig. 4 is a plan view showing a structure of an exhaust system in another embodiment according to the invention; and

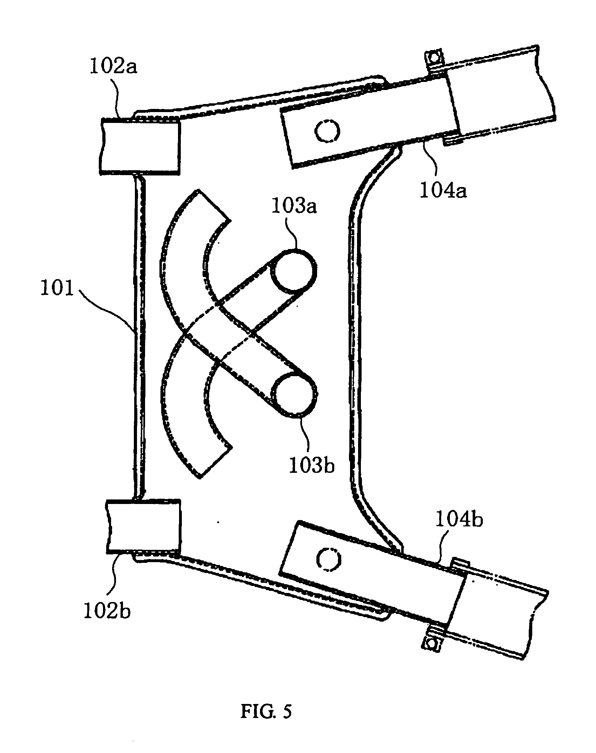

Fig. 5 is a vertical cross-sectional plan view showing a structure of a known exhaust chamber of a motorcycle in a related art.

### DETAILED DESCRIPTION OF THE DRAWINGS

For simplifying the explanation, similar reference numerals are given to components having substantially similar functions in the figures. The invention is not limited to this embodiment.

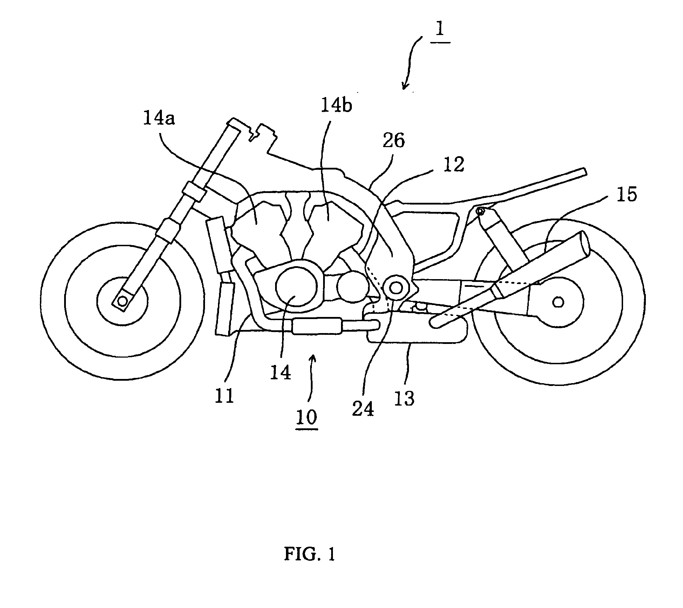

Fig. 1 illustrates a motorcycle 1 including an exhaust system 10 in an embodiment according to the invention.

As illustrated in Fig. 1, a V-type four-cylinder engine 14 is supported by a vehicle body frame 26. Front exhaust pipes 11 and rear exhaust pipes 12 are extended to the rear of the vehicle body from front cylinders 14a disposed before an engine 14 and rear cylinders 14b disposed behind the engine 14, respectively. The respective rear ends of the front and rear exhaust pipes 11 and 12 are collectively joined to an exhaust chamber 13. An exhaust muffler 15 is connected with the rear part of the exhaust chamber 13.

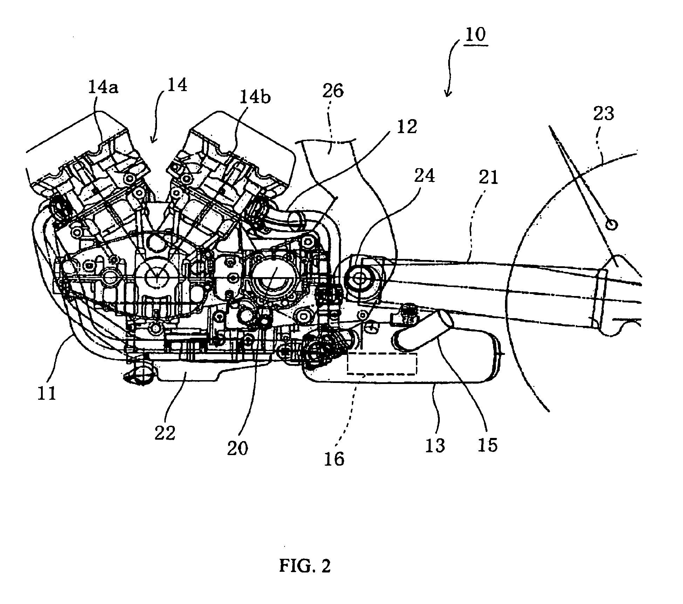

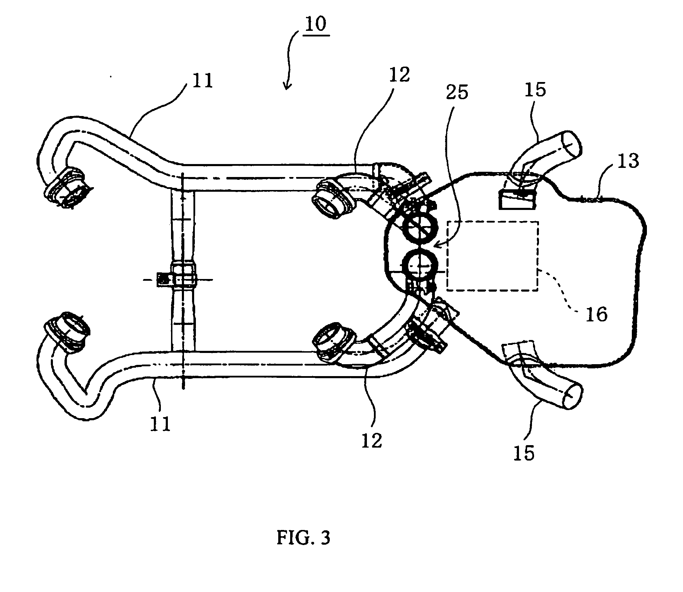

The basic structure of the exhaust system 10 of the motorcycle according to the invention is discussed with reference to Figs. 2 and 3.

Figs. 2 and 3 are side and plan views respectively of the exhaust system 10. As illustrated in Figs. 2 and 3, the rear ends of the front exhaust pipes 11 connected with the front cylinders 14a of the V-type engine 14 are joined to the front part of the exhaust chamber 13, and the rear ends of the rear exhaust pipes 12 connected with the rear cylinders 14b of the V-type engine 14 are joined to the upper part of the exhaust chamber 13. Both exhaust gases discharged from the front exhaust pipes 11 and the rear exhaust pipes 12 are unified within the exhaust chamber 13. A catalyst 16 is disposed in the vicinity of a unifying section 25 of the exhaust chamber 13.

As illustrated in Fig. 2, the exhaust chamber 13 is positioned behind an oil pan 22 below the engine 14, and located below the space between a transmission chamber 20 behind the engine 14 and a swing arm 21 supported by the vehicle frame 26 behind the transmission chamber 20.

As illustrated in Fig. 2, the front exhaust pipes 11 extend from the front parts of the front cylinders 14a through the lower part of the V-type engine 14 to be connected with the front part of the exhaust chamber 13. The rear exhaust pipes 12 extend from the rear parts of the rear cylinders 14b through the space between the transmission chamber 20 and a support center 24 of the swing arm 21 to be connected with the upper part of the exhaust chamber 13. This layout shortens the length of the rear exhaust pipes 12.

In the exhaust system 10 according to the invention, the rear exhaust pipes 12 have a shorter length to reach the connecting point with the exhaust chamber 13 than that length of the front exhaust pipes 11 so that exhaust gas discharged from the rear cylinders 14b can be introduced to the catalyst 16 contained in the exhaust chamber through the rear exhaust pipes 12 while keeping the highest possible temperature of the exhaust gas. Therefore, the purification function of the catalyst 16 can be efficiently offered by this structure.

Since the rear exhaust pipes 12 are connected with the upper part of the exhaust chamber 13, the front part of the exhaust chamber 13 is required to have only a width necessary for connecting with the front exhaust pipes 11. Thus, the front part of the exhaust chamber 13 can have a reduced width as illustrated in Fig. 3. Accordingly, the exhaust chamber 13 can be positioned closer to the engine, and therefore higher-temperature exhaust gas can be introduced to the catalyst 16 through the rear exhaust pipes 12.

It is preferable that the front exhaust pipes 11 connected with the front cylinders 14a of the engine 14 have a sufficient exhaust pipe length so as to obtain appropriate function of the engine 14. In this case, the temperature of the exhaust gas discharged through the front exhaust pipes 11 into the exhaust chamber 13 is lowered, but deterioration of the purifying function of the catalyst 16 can be prevented by unification of the exhaust gas from the front exhaust pipes 11 and high-temperature exhaust gas from the rear exhaust pipes 12 within the exhaust chamber 13.

In the exhaust system 10 according to the invention, the heavy catalyst 16 is positioned within the exhaust chamber 13. As a result, the heavy component of the motorcycle 1 is located closer to the center of gravity of the vehicle body. Accordingly, steering stability of the vehicle can be enhanced.

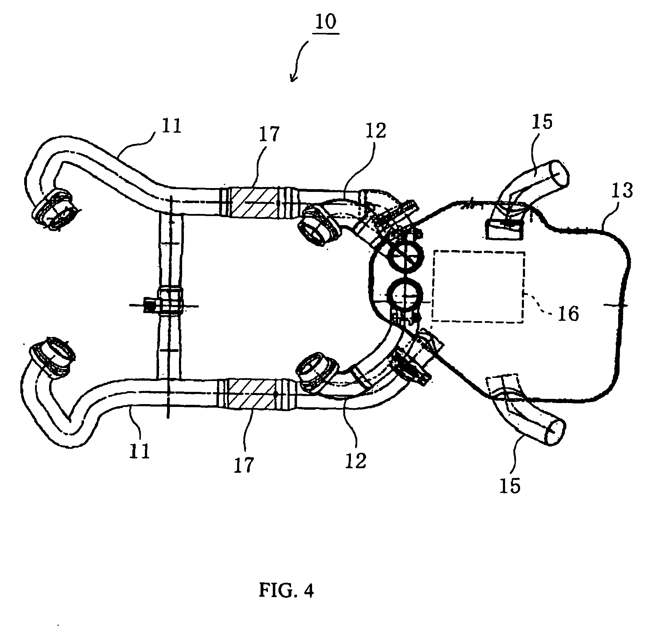

The invention is not limited to the preferred embodiment having been depicted and described herein, but obviously various modifications and changes may be given to the invention. For example, additional catalysts 17 may be disposed within some parts of the front exhaust pipes 11 as illustrated in Fig. 4. In this case, high-temperature exhaust gas discharged from the front exhaust pipes 11 is primarily purified by the catalysts 17 disposed within the front exhaust pipes 11 before the temperature of the exhaust gas is lowered. Thus, the purifying function of the entire exhaust system can be further enhanced.

The motorcycle according to the embodiments described refers to a vehicle which can turn to other directions while inclining its body, such as motorbike and motor scooter. Thus, three-wheel vehicles, four-wheel vehicles and vehicles having two or more wheels to define at least either a front wheel set or a rear wheel set, and are classified based on the number of wheels, are all included within the scope of the motorcycle according to the invention .

A motorcycle provided according to the invention has enhanced steering stability during running of the vehicle and improved function for purifying exhaust gas.

### Description of Reference Numerals and Signs:

- 1: motorcycle
- 10: exhaust system
- 11: front exhaust pipe
- 12: rear exhaust pipe
- 13: exhaust chamber
- 14: V-type engine
- 14a: front cylinder
- 14b: rear cylinder
- 15: exhaust muffler
- 16, 17: catalyst
- 20: transmission chamber
- 21: swing arm
- 22: oil pan
- 25: unifying section
- 26: vehicle body frame
- 101: exhaust chamber
- 102a, 102b: front exhaust pipe
- 103a, 103b: rear exhaust pipe
- 104a, 104b: joint pipe

## Claims

1. A motorcycle (1) comprising an exhaust system (10), the exhaust system comprising:
a front exhaust pipe (11) connected with a front cylinder (14a) of a V-type engine (14);
a rear exhaust pipe (12) connected with a rear cylinder (14b) of the V-type engine (14); and
an exhaust chamber (13) connected with the respective rear ends of the front exhaust pipe (11) and the rear exhaust pipe (12), wherein:
the rear end of the front exhaust pipe (11) is connected with a front part of the exhaust chamber (13); and
the rear end of the rear exhaust pipe (12) is connected with an upper part of the exhaust chamber (13);
wherein exhaust gases discharged from the front exhaust pipe (11) and the rear exhaust pipe (12) are unified in a unifying section (25) within the exhaust chamber (13), and a catalyst is disposed within the exhaust chamber in the vicinity of the unifying section (25); and
the length of the rear exhaust pipe (12) is shorter than the length of the front exhaust pipe (11), **characterized in that** the front part of the exhaust chamber (13) is of reduced width compared to the rear part of the exhaust chamber.

2. A motorcycle (1) according to claim 1, **characterized in that** an exhaust muffler (15) is connected with the rear part of the exhaust chamber (13).

3. A motorcycle (1) according to claim 1 or 2, **characterized in that** an additional catalyst is disposed within the front exhaust pipe (11).

4. A motorcycle (1) according to any preceding claim, comprising a plurality of front exhaust pipes (11) connected to at least one front cylinder of the V-type engine (14).

5. A motorcycle (1) according to claim 4 when dependent on claim 3, **characterized in that** an additional catalyst (17) is disposed within at least one of the front exhaust pipes (11).

6. A motorcycle (1) according to any preceding claim, comprising a plurality of rear exhaust pipes connected to at least one rear cylinder (14b) of the V-type engine (14).

7. A motorcycle (1) according to any preceding claim, **characterized in that**:
the motorcycle (1) includes a vehicle body frame (26), a transmission chamber (20) provided behind the V-type engine (14), a swing arm (21) disposed behind the transmission chamber (20) and supported by the vehicle body frame (26), and an oil pan (22) equipped below the V-type engine (14); and
the exhaust chamber (13) is disposed behind the oil pan (22) and below a space defined between the transmission chamber (20) and the swing arm (21).

8. A motorcycle (1) according to claim 7, **characterized in that**:
the front exhaust pipe (11) is adapted to extend from the front part of the front cylinder (14a) through the lower part of the V-type engine (14) to be connected with the front part of the exhaust chamber (13); and
the rear exhaust pipe (12) is adapted to extend from the rear part of the rear cylinder (14b) and through a space defined between the transmission chamber (20) and the support center (24) of the swing arm (21) to be connected with the upper part of the exhaust chamber (13).

## Patentansprüche

1. Motorrad (1), das eine Auspuffanlage (10) aufweist, wobei die Auspuffanlage aufweist:
ein vorderes Auspuffrohr (11), das mit einem vorderen Zylinder (14a) eines V-Motors (14) verbunden ist;
ein hinteres Auspuffrohr (12), das mit einem hinteren Zylinder (14b) des V-Motors (14) verbunden ist; und
eine Auspuffkammer (13), die mit den jeweiligen hinteren Enden des vorderen Auspuffrohres (11) und des hinteren Auspuffrohres (12) verbunden ist, wobei:
das hintere Ende des vorderen Auspuffrohres (11) mit einem vorderen Teil der Auspuffkammer (13) verbunden ist; und das hintere Ende des hinteren Auspuffrohres (12) mit einem oberen Teil der Auspuffkammer (13) verbunden ist;
wobei die Auspuffgase, die aus dem vorderen Auspuffrohr (11) und dem hinteren Auspuffrohr (12) ausgestoßen werden, in einem Vereinigungsabschnitt (25) innerhalb der Auspuffkammer (13) vereinigt werden, und ein Katalysator innerhalb der Auspuffkammer in der unmittelbaren Nähe des Vereinigungsabschnittes (25) angeordnet ist; und
wobei die Länge des hinteren Auspuffrohres (12) kürzer ist als die Länge des vorderen Auspuffrohres (11),
**dadurch gekennzeichnet; dass** der vordere Teil der Auspuffkammer (13) eine verringerte Breite aufweist, verglichen mit dem hinteren Teil der Auspuffkammer.

2. Motorrad (1) nach Anspruch 1, **dadurch gekennzeichnet, dass** ein Auspuffschalldämpfer (15) mit dem hinteren Teil der Auspuffkammer (13) verbunden ist.

3. Motorrad (1) nach Anspruch 1 oder 2, **dadurch gekennzeichnet, dass** ein zusätzlicher Katalysator innerhalb des vorderen Auspuffrohres (11) angeordnet ist.

4. Motorrad (1) nach einem der vorhergehenden Ansprüche, das eine Vielzahl von vorderen Auspuffrohren (11) aufweist, die mit mindestens einem vorderen Zylinder des V-Motors (14) verbunden sind.

5. Motorrad (1) nach Anspruch 4, wenn er vom Anspruch 3 abhängig ist, **dadurch gekennzeichnet, dass** ein zusätzlicher Katalysator (17) innerhalb von mindestens einem der vorderen Auspuffrohre (11) angeordnet ist.

6. Motorrad (1) nach einem der vorhergehenden Ansprüche, das eine Vielzahl von hinteren Auspuffrohren aufweist, die mit mindestens einem hinteren Zylinder (14b) des V-Motors (14) verbunden sind.

7. Motorrad (1) nach einem der vorhergehenden Ansprüche, **dadurch gekennzeichnet, dass**:
das Motorrad (1) umfasst: einen Fahrzeugkarosserieaufbau (26); eine Getriebekammer (20), die hinter dem V-Motor (14) vorhanden ist; einen Schwinghebel (21), der hinter der Getriebekammer (20) angeordnet ist und vom Fahrzeugkarosserieaufbau (26) getragen wird; und eine Ölwanne (22), die unterhalb des V-Motors (14) angebracht ist; und
wobei die Auspuffkammer (13) hinter der Ölwanne (22) und unterhalb eines Raumes angeordnet ist, der zwischen der Getriebekammer (20) und dem Schwinghebel (21) definiert wird.

8. Motorrad (1) nach Anspruch 7, **dadurch gekennzeichnet dass**:
das vordere Auspuffrohr (11) so ausgebildet ist, dass es sich vom vorderen Teil des vorderen Zylinders (14a) durch den unteren Teil des V-Motors (14) erstreckt, damit es mit dem vorderen Teil der Auspuffkammer (13) verbunden wird; und
das hintere Auspuffrohr (12) so ausgebildet ist, dass es sich vom hinteren Teil des hinteren Zylinders (14b) und durch einen Raum erstreckt, der zwischen der Getriebekammer (20) und dem Auflagemittelpunkt (24) des Schwinghebels (21) definiert wird, damit es mit dem oberen Teil der Auspuffkammer (13) verbunden wird.

## Revendications

1. Motocyclette (1) comprenant un système d'échappement (10), le système d'échappement comprenant:
un tuyau d'échappement avant (11) connecté à un cylindre avant (14a) d'un moteur type V (14);
un tuyau d'échappement arrière (12) connecté à un cylindre arrière (14b) du moteur type V (14); et
une chambre d'échappement (13) connectée aux extrémités postérieures respectives du tuyau d'échappement avant (11) et du tuyau d'échappement arrière (12), dans laquelle:
l'extrémité postérieure du tuyau d'échappement avant (11) est connectée à une partie antérieure de la chambre d'échappement (13); et l'extrémité postérieure du tuyau d'échappement arrière (12) est connectée à une partie supérieure de la chambre d'échappement (13);
les gaz d'échappement déchargés du tuyau d'échappement avant (11) et du tuyau d'échappement arrière (12) étant rassemblés dans une section de rassemblement (25) à l'intérieur de la chambre d'échappement (13) et un catalyseur étant disposé à l'intérieur de la chambre d'échappement au voisinage de la section de rassemblement (25); et
la longueur du tuyau d'échappement arrière (12) étant inférieure à la longueur du tuyau d'échappement avant (11),
**caractérisée par le fait que** la partie antérieure de la chambre d'échappement (13) est de largeur réduite par rapport à la partie postérieure de la chambre d'échappement.

2. Motocyclette (1) selon la revendication 1, **caractérisée par le fait qu'**un silencieux (15) est connecté à la partie postérieure de la chambre d'échappement (13).

3. Motocyclette (1) selon la revendication 1 ou 2, **caractérisée par le fait qu'**un catalyseur supplémentaire est disposé à l'intérieur du tuyau d'échappement avant (11).

4. Motocyclette (1) selon l'une quelconque des revendications précédentes, comprenant une pluralité de tuyaux d'échappement avant (11) connectés à au moins un cylindre avant du moteur type V (14).

5. Motocyclette (1) selon la revendication 4 lorsqu'elle dépend de la revendication 3, **caractérisée par le fait qu'**un catalyseur supplémentaire (17) est disposé à l'intérieur d'au moins un des tuyaux d'échappement avant (11).

6. Motocyclette (1) selon l'une quelconque des revendications précédentes, comprenant une pluralité de tuyaux d'échappement arrière connectés à au moins un cylindre arrière (14b) du moteur type V (14).

7. Motocyclette (1) selon l'une quelconque des revendications précédentes, **caractérisée par le fait que**:
la motocyclette (1) comprend une carrosserie de véhicule (26), une chambre de transmission (20) prévue derrière le moteur type V (14), un bras oscillant (21) situé derrière la chambre de transmission (20) et supporté par la carrosserie de véhicule (26) et un carter d'huile (22) prévu sous le moteur type V (14); et
la chambre d'échappement (13) est située derrière le carter d'huile (22) et sous un espace défini entre la chambre de transmission (20) et le bras oscillant (21).

8. Motocyclette (1) selon la revendication 7, **caractérisée par le fait que**:
le tuyau d'échappement avant (11) est adapté pour s'étendre depuis la partie antérieure du cylindre avant (14a) à travers la partie inférieure du moteur type V (14) pour être connecté à la partie antérieure de la chambre d'échappement (13); et
le tuyau d'échappement arrière (12) est adapté pour s'étendre depuis la partie postérieure du cylindre arrière (14b) et à travers un espace défini entre la chambre de transmission (20) et le centre de support (24) du bras oscillant (21) pour être connecté à la partie supérieure de la chambre d'échappement (13).
